# EUROPEAN PATENT SPECIFICATION

(11) **EP 1 555 887 B1**
(45) Date of publication and mention of the grant of the patent: **14.05.2008**
(21) Application number: 03773280.7
(22) Date of filing: 15.10.2003
(51) Int. Cl.: A23G 1/00, A23G 1/04

(54) **PRODUCING COCOA POWDERS WITH DIFFERENT COCOA BUTTER CONTENTS BY LIQUEFIED GAS EXTRACTION ON SUBSTANTIALLY THE SAME PRODUCTION LINE**
HERSTELLUNG VON KAKAOPULVER MIT UNTERSCHIEDLICHEM KAKAOBUTTERGEHALT MITTELS FLÜSSIGGASEXTRAKTION IN EINER IM WESENTLICHEN UNVERÄNDERTEN HERSTELLANLAGE
PRODUCTION DE POUDRES DE CACAO, AYANT DIFFERENTES TENEURS EN BEURRE DE CACAO, PAR EXTRACTION DE GAZ LIQUEFIE, SUR PRATIQUEMENT LA MEME LIGNE DE PRODUCTION

(30) Priority: 15.10.2002 US 272511
(43) Date of publication of application: 27.07.2005
(73) Proprietor: CARGILL, INCORPORATED, Wayzata, MN 55391-2399 (US)
(72) Inventor: JIRJIS, Bassam, F., Savage, MN 55378 (US); GUSEK, Todd, W., Crystal, MN 55422 (US); PURTLE, Ian, C., Plymouth, MN 55447 (US)
(74) Representative: Isenbruck, Günter
(86) International application number: PCT/US2003/032769
(87) International publication number: WO 2004/034803

(56) References cited:
- FR-A- 1 274 872
- US-A- 3 985 607
- US-A- 4 156 743
- US-A- 6 066 350
- US-A1- 2002 006 459
- US-A1- 2002 127 316

## Description

### Background

Cocoa butter and cocoa powder are vital food ingredients in the global chocolate industry. Production of these ingredients, however, presents unique, challenging problems to the innovator because of stringent demands by the chocolate industry, government regulations, and the consuming public. Typically, cocoa beans are processed and separated into two components, cocoa butter and cocoa powder (see, for example, U.S. Patent No. 6,066,350). The conventional separation method is mechanical pressing. Once separated, cocoa butter and cocoa powder are semi-finished products which can be then used in further making a wide variety of chocolate-related food and drink products

The conventional mechanical pressing separation method has problems, and recently significant improvements have been reported in the separation methods used to prepare cocoa butter and cocoa powder from cocoa mass. For example, an improved method involves a liquid-phase extraction process, which is economically efficient, as disclosed in U.S. Patent Nos. 6,066,350 ("the '350 patent") and 6,361,814 ("the '814 patent") and U.S. Patent Application Publication No. US 2002/0006459 A1 ("the '459 publication"). More specifically, the liquid phase used for extraction is a liquefied gas such as liquefied butane. Some general bias in the cocoa processing industry still exists, however, to continue to use conventional mechanical pressing methods rather than generally more efficient liquid extraction methods. For example, whether correct or not, some may believe that cocoa butter processed by liquid extraction is inferior to cocoa butter processed by conventional pressing. Also, capital improvements needed to conduct liquid extraction can be expensive and generally undesired in view of extensive existing capital investment in mechanical pressing. Hence, more improvements are still needed to improve efficiencies in liquid extraction, provide heretofore unachieved advantages, and drive further innovation beyond current entrenched attitudes.

Other reported efforts in processing cocoa beans and/or liquid extraction also include, for example, U.S. Patent Nos. 2,548,434 (Leaders); 2,560,935 (Dickinson); 5,041,245 (Benado); 5,281,732 (Franke); 5,389,394 (Franke); 5,707,673 (Prevost); 5,739,364 (Franke); and 6,111,119 (Trout), as well as WO 01/82714 A1 (Trout).

In developing new methods for processing cocoa beans, a number of factors may be taken into consideration. In general, favorable process economics and efficiencies are important objects. More specifically, another object is to eliminate the need for the conventional mechanical pressing step used to remove cocoa butter from cocoa beans. Another object is to improve safety by, for example, use of lower pressures during liquid extraction. Still another object is to meet governmental regulations regarding, for example, residual solvent content in products such as cocoa powder. A still further object is to avoid undesirable changes in color, texture, and/or flavor in the food product while achieving other advantages. Innovative methods for processing cocoa will preferably be capable of achieving one or more of the objects listed above.

A need also exists for a versatile production process which allows multiple cocoa powder products differing, for example, in cocoa butter content to be produced from substantially the same production line.

### Summary

The present patent application is directed to multiple embodiments for processing cocoa mass into cocoa powder and cocoa butter. The process includes mixing cocoa mass, which includes cocoa butter, with solvent comprising liquefied saturated hydrocarbon to provide a slurry, and separating the slurry to provide a stream enriched in cocoa butter and a stream enriched in cocoa solids. In one embodiment, the cocoa mass can be mixed with the solvent with use of passive mixing including, for example, a static mixer to provide the slurry. In another embodiment, it may be advantageous to form the slurry at relatively low temperature, e.g., about 10°C to about 34°C. This can allow the process to be conducted under a relatively low pressure even when the solvent employed is a volatile hydrocarbon solvent such as butane. It surprisingly has also been found that relatively short mixing times of the solvent with the cocoa mass are generally sufficient to efficiently remove cocoa butter from the cocoa mass. For example, even at temperatures of about 10°C to about 34°C, contact times of no more than, for example, about 100 seconds are commonly sufficient to extract effectively cocoa butter from cocoa mass with a hydrocarbon solvent. It has also been found that when saturated hydrocarbon solvents such as n-butane are used to remove cocoa butter from cocoa mass, several factors can be controlled to determine the amount of residual cocoa butter in the cocoa powder. For example, important factors include controlling the ratio of solvent to cocoa mass and controlling the use of wash stages. Hence, from a single production line using a single source of cocoa mass, the amount of cocoa butter in the cocoa powder can be facilely controlled to tailor the product for a given application. This provides considerable economic efficiency.

The present invention also provides for continuous, but also versatile, cocoa powder production comprising the steps of (1) producing a cocoa powder from a continuous production line having a cocoa butter content, and (2) producing another cocoa powder also having a cocoa butter content from a continuous production line. The production lines in (1) and (2) are substantially the same. The difference between the two cocoa butter contents, however, is at least about 8 wt.%. The production line comprises at least one passive mixer for extracting cocoa mass with liquefied solvent, and at least one zone for removing solvent from the mass after extraction. An advantage, therefore, is that multiple cocoa powder products can be produced on substantially the same production line, but having large differences in cocoa butter contents.

### Brief Description of the Drawings

Fig. 1 illustrates an embodiment wherein one wash stage is used with no recycling of the wash fluid.

Fig. 2 illustrates an embodiment wherein one wash stage is used with recycling of the wash fluid to the mixer.

Fig. 3 illustrates an embodiment wherein two parallel wash stages are used with no recycling of the wash fluid.

Fig. 4 illustrates an embodiment wherein two parallel wash stages are used with recycling of the wash fluid to the mixer.

Fig. 5 illustrates an embodiment wherein two wash stages, in countercurrent arrangement, are used with no recycling of the wash fluid.

Fig. 6 illustrates an embodiment wherein two wash stages, in countercurrent arrangement, are used with recycling of the wash fluid to the mixer.

Fig. 7 illustrates an embodiment where two wash stages are used, one wash being pure solvent and another wash being a mixture of pure solvent and recycled wash.

Fig. 8 illustrates an embodiment for a continuous liquefied gas extraction of cocoa liquor for production of cocoa powder having less than about 2 wt.% remaining cocoa butter.

Fig. 9 illustrates an embodiment for a continuous liquefied gas extraction of cocoa liquor for production of cocoa powder having about 9 wt.% to about 13 wt.% remaining cocoa butter.

### Detailed Description

Background references on cocoa processing include, for example: (i) Chocolate, Cocoa, and Confectionary: Science and Technology, 3rd Ed., B.W. Minifie, Van Nostrand Reinhold (1989), particularly chapters 1-3, and (ii) Industrial Chocolate Manufacture and Use, Ed. S.T. Beckett, Blackie Academic & Professional (1994), particularly chapters 1-7. In addition, the above-cited '350 patent, '814 patent, and '459 publication also provide background.

The methods described herein can be applied to different scale size including bench scale, pilot plant scale, and full scale manufacturing.

Various cocoa masses and cocoa liquors can be used. The meanings of these terms are discussed in U.S. Patent No. 6,066,350. In general, the mass which results from grinding of nibs is referred to as cocoa mass or cocoa liquor. The term cocoa mass refers to a mixture of cocoa fat and solids. A cocoa mass, for example, would be ground cocoa nibs, before later processing, whether dutched or not. The term cocoa liquor is used herein to refer to cocoa mass which results from grinding cocoa nibs, whether dutched or not, but which has not been modified with respect to its fat content (typically 50% or greater). Thus, cocoa liquor is one type of cocoa mass.

Known methods can be used to prepare the cocoa mass from the cocoa bean prior to the mixing and separation steps. For example, cocoa masses can be cooled and tempered, before or after being ground. The cocoa mass can be prepared by grinding methods known in the art (see, for example, Chapter 7 of Industrial Chocolate Manufacture and Use). These methods include, without limitation, use of fluted rollers, hammer mills, blade mills, disc mills, extruders, and tumbling ball mill grinding. Pre-grinding and fine grinding methods can be used.

In general, the cocoa mass comprises at least about 10 wt.%, and more particularly, at least about 20 wt.%, and even more particularly, at least about 45 wt.%, cocoa butter, but generally less than about 60 wt.% cocoa butter. In one embodiment, the cocoa butter can be higher such as, for example, at least about 60 wt.% or at least about 80 wt.% when extra cocoa butter is added.

The water content of the cocoa mass can be, for example, about 1-2 wt.%.

In general, the fineness of the cocoa mass which is subjected to mixing and separation determines the fineness of the cocoa powder produced from it. Fineness includes both the parameters of average particle size and particle size distribution. Fineness also affects the quality of the mixing, extraction, and separation, and may affect under what process conditions certain levels of residual cocoa butter in the cocoa powder can be achieved. In general, more finely ground powders will provide higher surface areas which should improve extraction efficiency during mixing, but may also provide for a more densely packed cake if a belt filter is used for separation. Large particles can be undesirably associated with grittiness in a food product. A densely packed cake may reduce the possible feed and wash rate. Hence, fineness can be adapted for particular applications or process economics.

In general, the ground cocoa mass can include solid particles wherein, for example, at least about 90 wt.% of the particles pass through a # 200 mesh screen (i.e., less than about 75 micron diameter). Average particle size can be, for example, about 8-10 microns as measured by the X₅₀ value in a particle size distribution curve.

Because the average particle size and the particle size distribution can affect extraction efficiency and the ability to reduce the amount of residual cocoa butter in the cocoa solids, these parameters can be advantageously controlled. For example, relatively fine particle cocoa mass can be used which has been processed by both knife milling and by two stages of ball mills. Alternatively, relatively coarse cocoa mass can be used which has been processed only by the knife mill, without ball milling, or by other coarse grinding or flaking processes. Although use of relatively fine particles may improve extraction efficiency, it may also make separation processes less efficient and more difficult. Hence, one skilled in the art can adjust particle size in view of the particular application. The following Table 1 illustrates two embodiments for cocoa mass particle size distributions:

**Table 1**

| **Cocoa mass sample** | **X₁₀ (microns)** | **X₁₀ (microns)** | **X₉₀ (microns)** |
|---|---|---|---|
| Coarse cocoa mass prepared by grinding step with knife mill without ball milling | 2.83 | 9.70 | 57.71 |
| Fine cocoa mass prepared by knife milling and two additional milling steps with ball mills | 2.70 | 8.45 | 24.56 |

The X₁₀ value of the cocoa mass can be about 3 microns or less, and more particularly, about 2.5 microns to about 3 microns. The X₅₀ value of the cocoa mass can be between about 8 microns and about 10 microns. For a relatively coarse grind cocoa mass, X₅₀ can be about 9.5 microns to about 10 microns. For relatively fine grind cocoa mass, the X₅₀ value can be about 8 microns to about 9 microns. The X₉₀ value for coarse grind cocoa mass can be about 50 microns to about 70 microns, and for relatively fine grind cocoa mass about 20 microns to about 30 microns.

Particle size distributions, including parameters such as X₁₀, X₅₀, and X₉₀, can be measured by methods known in the art including use of a laser defraction analyzer wherein cocoa liquor is suspended and sonicated in soybean oil in a container and then circulated over the cuvet/vial at an instrument detector. Measurements can be carried out with a Sympatec Helos-KA instrument using a low focal length lens (100 mm) when the cocoa particles consist mainly of fines.

Mechanical pressing of the cocoa mass to separate out cocoa butter can be avoided to achieve the full benefit of the presently claimed processes. In other words, an advantageous feature of the present process is the elimination of mechanical pressing which is so prevalent in the art. Nevertheless, in part because of economics and the need to use existing equipment, some situations can be conceived wherein a hybrid approach can be used involving treatment of cocoa mass with both mechanical pressing and liquefied gas extraction. For example, the percentage of cocoa butter in the cocoa mass can be initially reduced by mechanical pressing before being reduced further by the claimed liquid separation processes.

The cocoa mass is mixed with solvent to begin the extraction process. In general, the solvent system is based on saturated hydrocarbons including alkane solvents and mixtures thereof such as n-propane, n-butane, isobutane, and n-pentane, and mixtures thereof. The saturated hydrocarbon solvents generally have molecular weights of more than 40 and less than 75. One skilled in the art can adapt the solvent system to a particular set of conditions. It is preferred that at least 75 wt.%, and preferably at least about 90 wt.%, and more preferably, substantially all of the solvent system is n-butane. If impurities are present, they preferably are present in undetectable amounts. Preferably, the n-butane is substantially free of propane and pentane. Also, preferably, hexane is not present. In general, solvent systems should comply with government regulations, which can vary from region to region, and be "food grade" solvents. Unsaturated hydrocarbons and sulfur are not generally desired in the solvent. Also, potential carcinogens such as 1,3-butadiene are preferably not present in any amount or at least non-detectable amounts. n-Butane can be distilled from field gas to provide low impurity butane; also, it can be obtained from, for example, Exxon Mobil or Kloeckner.

By way of background, chemical engineering aspects of mixing and extraction are generally discussed in the prior art at, for example, (i) a chapter at pages 221-264 in Unit Operations of Chemical Engineering, 3rd Ed., W. McCabe and J. Smith, McGraw Hill, 1956, and (ii) at pages 139-219, including pages 190-191, and pages 477-561 in Mass-Transfer Operations, 3rd Ed., R. Treybal, McGraw-Hill, 1980.

Relatively short mixing times can be achieved in a continuous manner, with rapid flow rates for feed streams of solvent and cocoa mass, to provide excellent process efficiency and economics. This contrasts with prior art methods which generally provide batch-wise mixing with lengthy mixing times. Mixing devices which can be used to achieve the short mixing time are discussed below.

The "mixing time before separation" is the time the cocoa mass and solvent spend in the mixing device from the point of mixing to the point where the mixture enters the separation device. Hence, the mixing time before separation includes both the time the mixture is in the mixing device and any time the mixture is in transportation means such as piping which connects the mixing device with the separation device. Mixing time before separation, therefore, does not include the time the mixture is in the separation device. The mixing time before separation can be, for example, about 2 seconds to about 240 seconds, and more particularly, about 20 seconds to about 120 seconds, and more particularly, about 30 seconds to about 120 seconds, and more particularly, about 60 seconds to about 110 seconds.

One skilled in the art can vary the mixing time before separation to determine its effect on performance. In general, shorter mixing times are preferred as long as sufficient extraction occurs. For example, longer pipes or additional mixing vessels can be used to increase mixing time before separation. Data can be obtained wherein the percent residual cocoa butter in the cocoa powder is measured as a function of the mixing time before separation. In general, surprisingly, the additional positive benefit by increasing pipe length, thereby increasing the mixing time before separation, may be minimal or non-existent. Extraction can occur very rapidly.

The mixing element(s) which provides the short mixing times before separation can be a dynamic mixer or a passive, non-dynamic mixer. Dynamic mixers have one or more moving parts driven by an external power source such as a motor. They promote mixing by providing energy to the flow of incoming streams. Examples of dynamic mixers include stirred tank reactors, recycle pumps, blenders, shakers, certain kinds of homogenizers designed for dynamic mixing, ultrasound, and in-line mixers including high shear, in-line mixers available from Silverson. In general, however, dynamic mixers are not preferred. Rather, passive, non-dynamic mixers, and in particular, static mixers are preferred.

Mixing of liquid solvent and cocoa mass feed streams can be carried out by passive mixing in a passive mixer under passive mixing conditions. The passive mixer is different from a dynamic mixer in that it is free of internally moving parts driven by, for example, a motor and shaft. Rather, passive mixing uses the inherent energy of flow from one or more fluid feeds coming into the mixer to provide the mixing action. Flow can be provided by a pump separated from the passive mixing device but not internal. Unexpectedly excellent extraction results are still obtained, despite the passive nature of the mixing action. Examples of passive mixers include venturi mixers, orifice-type homogenizers, injectors, and static mixing devices.

The passive mixer can be, for example, a static mixer. Static mixers can deliver numerous advantages including low capital costs (costs less to buy, install, and operate), low pressure drops, low energy consumption, low space requirements, and no moving parts. Another advantage for the static mixer is the absence of seals. Nevertheless, the advantages of static mixers and other passive mixing devices apparently have not been appreciated for cocoa mass processing as disclosed herein. In the present context, the absence of internal moving parts is particularly desirable in view of the explosive potential of liquefied hydrocarbon solvent.

A static mixer can comprise a series of stationary mixing elements inserted end-to-end along the direction of flow in a pipe, channel, sump, duct, or other housing where the streams to be mixed are flowing together. Each of the mixing elements can be a specially designed rigid structure which divides and recombines the flow stream. Mixing can be achieved as the redirected fluid follows the geometry of the flow channels of the static mixing elements. As more mixing elements are used in the static mixer, the fluid discharge from the mixer becomes more homogeneous. Multiple static mixers can be used as needed. Series and parallel arrangements can be used.

The specific design of the static mixer best suited for the cocoa processing application can depend on factors known in the art including the flow regime (laminar or turbulent), the presence of solids and/or gases, and the relative flow rates, concentrations, viscosities, densities of the streams, temperature, and pressure. One skilled in the art can adapt the selection of the static mixer, or other passive mixing device, to the particular conditions desired.

Preferably, the static mixer is a long, cylindrical pipe containing a number of helical elements. The length of the static mixer can be varied to achieve the desired performance. Length can also depend in part on the scale of the operation. Typical lengths in a pilot-plant production scale include about 350 mm to about 5,000 mm, and more particularly, about 350 mm to about 2,000 mm, and more particularly, about 350 mm to about 1,000 mm, and preferably about 430 mm. Typical mixing elements are fixed into the housing of the static mixer and include screw-shaped elements. Examples of static mixers which can be used include those available from Verder Vleuten B.V. and Kenics. A preferred static mixer is a Kenics static mixer type 1/2 KMS 18. It has a diameter of one-half inch, a length of 432 mm, and 18 screw shaped elements.

Whether the mixing is dynamic or passive, mixing is preferably carried out continuously.

The pressure during mixing can be affected by the temperature during mixing. During mixing, the pressure is maintained sufficiently high so that the saturated hydrocarbon solvent is liquefied and remains a liquid. Once pressure is sufficient for solvent liquefication, however, higher pressures can be avoided to reduce safety hazards. Pressure can be, for example, about 15 psig (1.03 barg) to about 1,000 psig (68.97 barg), and more particularly, about 20 psig (1.38 barg) to about 100 psig (6.90 barg). For liquid butane extraction, for example, the pressure can be about 25 psig (1.72 barg) to about 50 psig (3.45 barg).

Prior art suggests that higher temperatures (e.g., temperature high enough to melt or at least soften the cocoa butter) are desirable for mixing because they promote increased solubility, reduced viscosity, and generally more efficient extraction. The '350 patent, for example, discloses that the temperature of mixing can be 35°C to 90°C. In contrast, however, it has presently been discovered that lower temperatures can be used such as, for example, about 10°C to about 34°C, or more particularly, about 20°C to about 32°C, and more particularly about 25°C to about 30°C. Nevertheless, fast extraction can still be achieved. Lower temperatures also promote better safety because of the lower pressure.

As known to those skilled in the art, cocoa butters gradually melt and soften as they are warmed, and gradually solidify and harden when they are cooled, and this gradual behavior can vary with different cocoa butters. When relatively low temperatures are selected (e.g., 10°C to 34°C), the temperature is preferably at or below, and preferably below, the Wiley melting point of the cocoa butter in the cocoa mass.

The cocoa mass feed stream can be held at a temperature above the cocoa butter's Wiley melting temperature just before mixing with liquefied saturated hydrocarbon solvent. In contrast, the liquefied hydrocarbon solvent feed stream can be held at a temperature below the cocoa butter's Wiley melting temperature just before mixing with the cocoa mass. Upon mixing of cocoa mass and hydrocarbon at these temperatures, therefore, an intermediate temperature is reached such as, for example, about 25°C-30°C, temperatures at or below the cocoa butter's Wiley melting point. For example, in this embodiment, the cocoa mass temperature can be about 35°C to about 60°C, and preferably about 45°C, before mixing, and the liquefied saturated hydrocarbon solvent can be about 0°C to about 10°C, and preferably about 5°C, before mixing.

The mixing temperature can be at least about 10°C or more in order to prevent crystallization of the cocoa butter. One skilled in the art can vary parameters such as the mixing temperature and solvent concentration under particular conditions to prevent crystallization.

Temperature dependent parameters such as crystallization and melting can be detected by methods known in the art, including observation of turbidity, differential scanning calorimetry, and Shukoff cooling curves. Also, methods known in the art can be used to measure the mixing temperature.

A relatively low mixing temperature coupled with more simple equipment such as a static mixer results in better economics and improved safety among other things. Surprisingly, saturated hydrocarbon solvents such as n-butane and isobutane, as discussed further below, apparently are such good solvents for the cocoa butter that higher temperatures are not needed for suitable extraction. If desired, however, in another embodiment, relatively higher mixing temperatures can be used such as, for example, from about 35°C to about 60°C. At these temperatures, the cocoa butter is more fully melted and softened as the temperature is generally above the cocoa butter's Wiley melting point.

In one embodiment, the mixing temperature can be, for example, about 25°C to about 45°C. The mixing pressure can be, for example, about 2 barg to about 5 barg.

The rates at which the cocoa mass and solvent are fed into a particular mixer can depend on the scale of operation. In pilot plant scale operation, for example, the cocoa mass or cocoa liquor feed rate into the mixer generally can be, for example, about 2 kg/hr to about 100 kg/hr, and more particularly, about 5 kg/hr to about 50 kg/hr, and more particularly about 10 kg/hr to about 45 kg/hr. For full scale operation, however, much higher feed rates can be used such as, for example, 500 kg/hr to 20,000 kg/hr, or more particularly, 500 kg/hr to 5,000 kg/hr. Slower feed rates are generally used as the desired amount of residual cocoa butter in the cocoa powder is decreased. Hence, a residual 11 wt.% cocoa butter in a cocoa powder product can be made with use of a feed rate of, for example, 12,000 kg/hr or 3,000 kg/hr, whereas the rate for a corresponding residual 1 wt.% cocoa butter in cocoa powder can be approximately 40-60% of that, e.g., half that, 6,000 kg/hr or 1,500 kg/hr, respectively.

In pilot plant scale operation, the solvent stream (which can contain cocoa butter) flowing into the mixer can be used at feed rates of, for example, about 5 kg/hr to about 60 kg/hr, and more particularly, about 10 kg/hr to about 50 kg/hr, and more particularly, about 15 kg/hr to about 40 kg/hr. For full scale operation, however, much higher feed rates can be used such as, for example, 500 kg/hr to 20,000 kg/hr, or more particularly, 500 kg/hr to 5,000 kg/hr.

In continuous processes, the relative feed rates for mixing solvent and cocoa mass can be used in determining the ratio between the mass of solvent and the mass of cocoa mass.

In general, the result of mixing the cocoa mass and saturated hydrocarbon solvent is to form a slurry, as known by those skilled in the art, which is then subjected to separation. The slurry can be transported through a piping or tubing to a separation device. If desired, the slurry can be cooled after mixing and before entering the separation device. The size of this tubing can be adjusted to determine its effect on the process. Typical tubing lengths in pilot plant experiments can be, for example, about 1.5 meters to about 13 meters. The time the slurry is being transported from mixer to separator is included in the calculation of mixing time before separation.

A variety of devices can be used for separation such as, for example, a belt filter. Belt filters are particularly preferred over other separation methods when very low cocoa butter content is desired in the desolventized cocoa powder such as less than 1 wt.%. The belt filter preferably has the capability to integrate filtration and washing steps in a single device, and allows for different types of cocoa products to be produced from only one production line. It should allow for pressurization. Belt filters which can be used are disclosed in, for example, U.S. Patent Nos. 4,038,193; 5,665,225; 5,840,187; and 5,914,038. In a preferred embodiment, the belt filter is obtained from Pannevis, B.V. (Utrecht, Netherlands) (RT/PT 0.1 X 1 m, serial number 1554).

The belt filter can be operated preferably in a continuous mode, although at times, if desired, the belt can be moved intermittently in a semi-continuous manner. Selection and operation of the belt filter can be determined by one skilled in the art for the particular production conditions desired. Parameters which can be varied include, for example, selection of belt size, tray stroke length, belt speed, cake thickness, filter cloth, cake wetness, use of washing, washing stream feed rates, washing stream location, retention time of cake on filter, pressure differential, tray between-stroke retraction time, recycling of materials passing through the belt, washing the back of the belt, and the number of filtrate tanks. For example, the belt filter can provide a pressure differential of about 1 atmosphere, 1 bar, or about 15 psi (the pressure on the bottom side of the belt being less). Polypropylene or polyester belts can be used, with or without a polyurethane coating. A typical belt speed is 1 cm/sec. The cloth for the belt filter can be, for example, a Madison Filter, Azurtex PET polyester with polyurethane coating.

The belt filter can be equipped with a washing system which allows for washing the underside of the belt at a point after the cocoa material leaves the belt but before the belt returns for more separation of the slurry.

The belt filter can be used in different embodiments including (1) a single stage extraction embodiment, wherein washing is not carried out, and (2) a wash stage extraction embodiment, wherein at least one wash stage is carried out. Two or more wash stages can be carried out. If washing is carried out, the washing can be parallel or countercurrent. In the parallel embodiment, a wash stream is typically first split into two wash streams, and both wash streams then separately pass through the belt. In the countercurrent embodiment, in contrast, the wash stream in a first wash passes through the belt, and then in a second wash is passed through the belt again at a different point.

One skilled in the art can determine suitable mixing ratios between the total mass of the solvent in the solvent system and the total cocoa mass subject to extraction from the solvent system. In considering the total ratio, the total process is considered including the mixing step and any washes in the separation. The total mass of the solvent system, therefore, can result from the solvent flowing into the mixer, as well as solvent used in washing the cake on the belt filter. The ratio of solvent to cocoa mass, or liquor, can be conveniently called the S/L ratio (S=solvent; L=liquor). In general, motivation exists to reduce the total amount of solvent (low S/L ratio) because of the limits of flux through the cloth and the expense later on in removing solvent by, for example, distillation. However, use of lower amounts of solvent can make it difficult to reduce cocoa butter content in the cocoa powder to a sufficiently low level because of high viscosity.

In a continuous process, S/L ratios are governed by the feed rates of the streams going into the mixer, as well as the feed rates of any wash streams and feed rates of fresh solvent into the system. If desired, pure solvent can be mixed with recycled solvent from, for example, the wash stream or the initial filtration of the slurry on the belt filter. The recycled solvent typically would comprise cocoa butter.

In general, the total mass ratio between the mass of solvent and the mass of cocoa mass can be, for example, about 0.1:1 to about 2:1. More particularly, it can be, for example, about 0.2:1 to about 1:1. Even more particularly, it can be, for example, about 0.2:1 to about 0.5:1. Ratios higher than about 5:1 are particularly undesirable.

For a single stage extraction embodiment, wherein no wash stages are used, the total solvent to cocoa mass ratio can be less than about 5:1, and more particularly, less than about 2:1, and more particularly, less than about 1.5:1. The ratio can be about 0.2:1 to about 0.6:1. Surprisingly, low S/L ratios such as, for example, a ratio of about 0.5:1 can still give suitable viscosity for separation on a belt filter. Also, surprisingly, separation of cocoa butter from cocoa mass can even be achieved even with no solvent (S/L ratio of zero) if the mixing and separation temperatures are greater than the Wiley melting temperature of the cocoa butter. In general, for the single stage extraction embodiment, reducing the S/L ratio increased the amount of residual cocoa butter in the cocoa powder. For example, an S/L ratio of 0.4:1 can result in 20 wt.% cocoa butter in the cocoa powder, whereas an S/L ratio of 1.8:1 can result in 6 wt.% cocoa butter in the cocoa powder.

In general, less solvent can be used as one or more wash steps are used. Also, in general, achieving less than about 5 percent by weight cocoa butter in the cocoa powder is more difficult to achieve without use of one or more washes. The amount of residual cocoa butter in the cocoa powder, for example, can be about 6 wt.% to about 8 wt.% if no wash is used (single stage extraction), and this can be reduced to about 1 wt.% with a first wash, and this can be further reduced to about 0.5 wt.% with a second wash.

When washing steps are used as part of separation, the total solvent to cocoa mass ratio considering solvent used in both mixing and washing can be less than about 5:1, and more preferably, less than about 2:1, and more preferably, less than about 1.5:1. The ratio can be about 0.4:1 to about 0.8:1.

Wetness is the weight percentage of solvent in the cocoa solids as they move off the belt filter. Cake wetness can be about 10 wt.% to about 30 wt.%, and in particular, about 20 wt.% to about 30 wt.%. In general, wetness values were higher when cocoa powder was produced with higher amounts of residual cocoa butter (e.g., 10/12 powder).

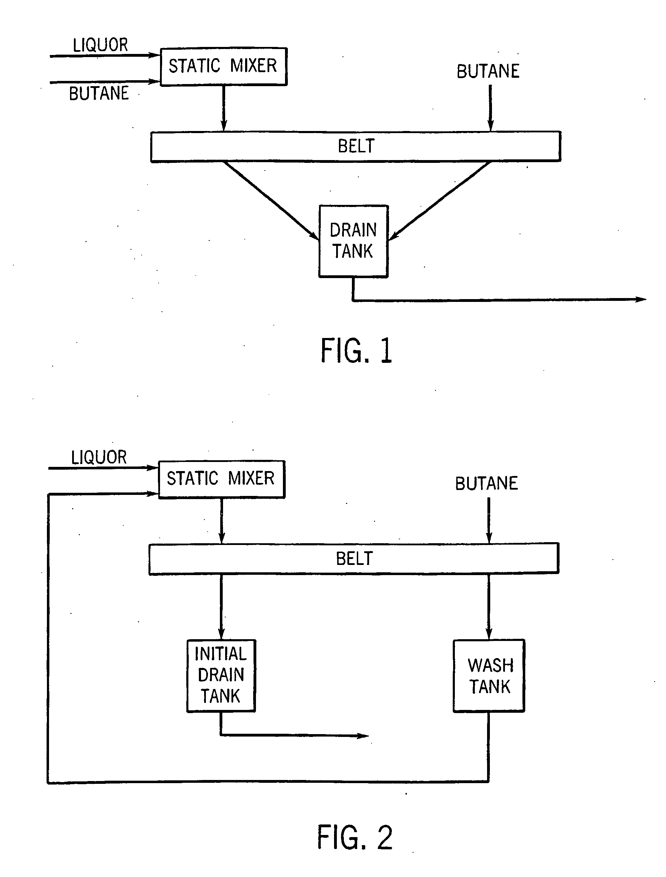

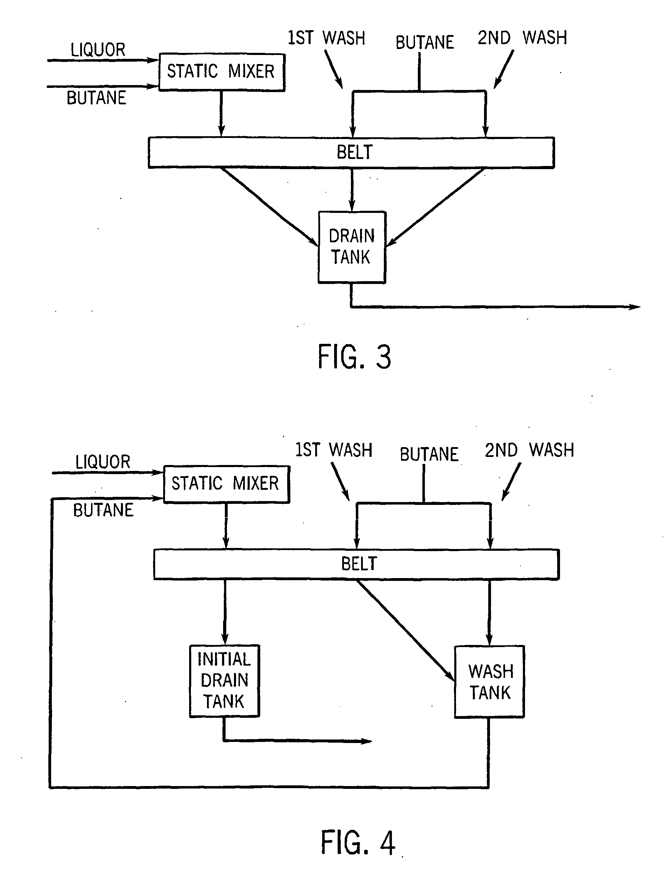

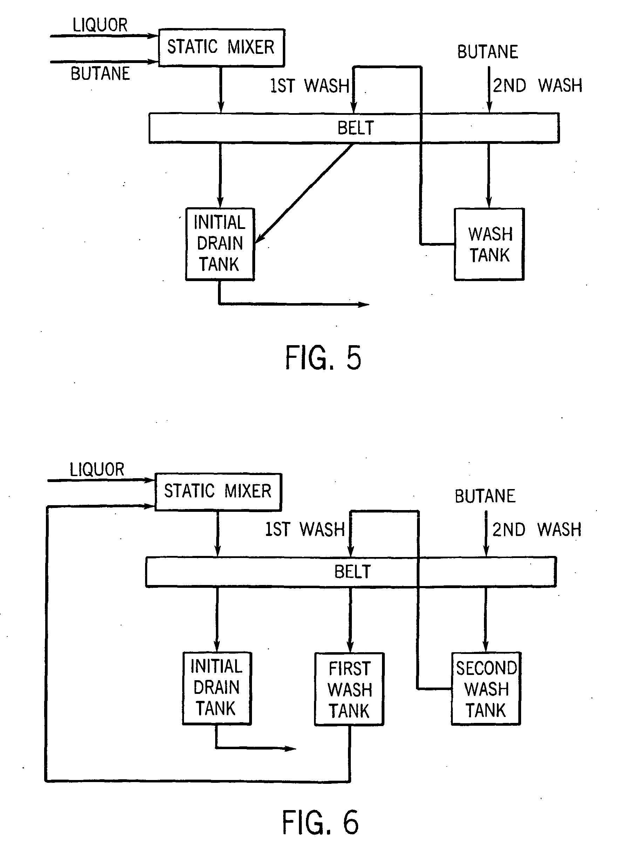

If desired, recycling of solvent-containing streams can be carried out to improve efficiencies. Recycled solvent can flow back to the mixer or to the wash stages. For example, several representative embodiments, some of which include the recycling, are illustrated in figures 1-6:
1) one wash, no recycle flow, Figure 1,
2) one wash, wash liquid recycled to mixer, Figure 2,
3) two parallel washes, no recycle flow, Figure 3,
4) two parallel washes, wash liquid recycled to mixer, Figure 4,
5) two countercurrent washes, no recycle flow, Figure 5, and
6) two countercurrent washes, wash liquid recycled to mixer, Figure 6.

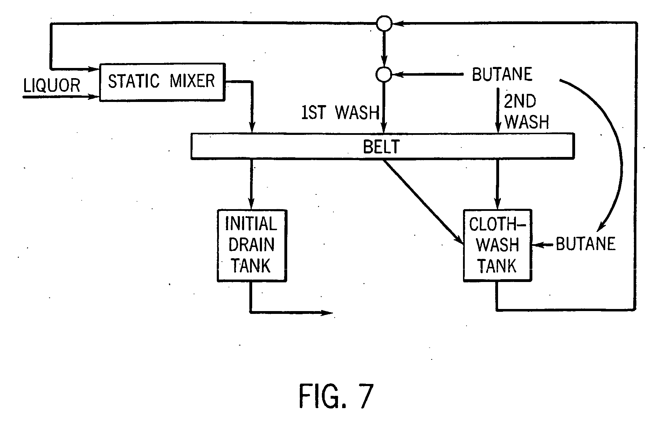

The washing solvent streams in the belt filter preferably can be pure solvent and have no cocoa butter content. However, in some cases where recycling of streams is desired, the solvent can include some cocoa butter content, up to a level where no further cocoa butter can be extracted. If the solvent contains cocoa butter, it preferably is used to extract cocoa butter during the mixing step, when the cocoa butter content is relatively high rather than in the separation step, when the cocoa butter content has been reduced. If wash is recycled and used again, additional butane can be added to reduce the percentage of cocoa butter in the wash. Configurations employing this concept are shown in Figures 7-9.

In general, the amount of solvent is chosen such that the separated solvent phase comprising solvent and cocoa butter, the miscella, will include at least 10%, preferably at least 25%, and more preferably at least 35% by wt. cocoa butter.

After the mixing step to form a slurry, the slurry can be separated to form a stream enriched in cocoa butter and a stream enriched in cocoa solids as discussed above.

In the stream enriched in cocoa butter, the cocoa butter and solvent together form the miscella, which is separated from the cocoa solids. Any washings also can be combined into the miscella if desired. Solvent can be removed from the miscella to yield cocoa butter by known methods including use of flash tanks and distillation. Residual solvent content in the cocoa butter can be, for example, less than 500 ppm, less than 100 ppm, or less than 50 ppm. Preferably, the value is made as low as possible and complies with any regulations.

In the stream enriched in cocoa solids, the cocoa solids are further processed by known desolventization methods to provide cocoa powder with residual cocoa butter content and residual solvent content. Moisture level is generally less than about 4 wt.%, and more usually, less than about 2 wt.%. Desolventization can be carried out by methods including vacuum pulling and nitrogen sparging at higher temperature of, for example, 60°C to 70°C. The vacuum can be, for example, -0.7 Bar-g to -1 Bar-g, with vacuum increasing as solvent is volatilized. The time can be 15-120 minutes, the operation being carried out with continuous stirring and a nitrogen sparge of 0-0.6 kg/hr. The residual solvent content in the cocoa powder can be, for example, less than 100 ppm, or more particularly, less than 50 ppm. Again, preferably, the value is made as low as possible and complies with any regulations.

In addition to belt filters, other separation devices can be used including, for example, centrifuges and decantors. Centrifuges can be used more favorably when achieving low cocoa butter content in the cocoa powder is less important. For example, centrifuges can be preferred when it is desired to produce cocoa powder with about 10-12 wt.% cocoa butter. Other separation methods include, for example, hydroclone separation processes, vacuum drum filters, rotors, candle filters, and membranes.

Upon separation, the stream enriched in cocoa solids is suitable with further processing to provide cocoa powder with a particular cocoa butter content which can vary with the application. This content can be determined after breaking up clumps of solids and desolventization for which known methods can be used. A cocoa butter content of less than about 25 wt.%, and more particularly less than about 20 wt.% is generally desired, and more particularly, less than about 15 wt.%, and more particularly, less than about 5 wt.%, and even more particularly, less than about 1 wt.%. One preferred range is about 9 wt.% to about 15 wt.%, or more particularly, about 9 wt.% to about 13 wt.%, with an even more particular range being about 10 wt. % to about 12 wt.%. Depending on the target product, another range is about 0.01 wt.% to about 2 wt.%. In general, low-fat or fat-free cocoa powder is preferably produced. For example, cocoa butter content can be reduced to no more than 0.5 wt.%, or less than 0.1 wt.%, becoming so low that its difficult to detect.

Residual cocoa butter content can be determined by methods known in the art including methods used by the Scientific Working Group of the IOCCC, IOCCC 37-1990, which is a Soxhlet extraction method performed with use of PE 40-60. Another method is Near Infrared Spectroscopy (NIR).

An unexpected feature of the present process is that using combinations of features may provide heretofore unachieved advantages. For example, an excellent combination is the use of passive mixing in combination with temperatures at or below the Wiley melting point of cocoa butter. These parameters, also, can be used in combination with the belt filter, with optional wash and recycling features, to provide an economic, and efficient process. Further combining of these features with the mechanical press-free character of the overall process even further improves the process. The percent cocoa butter in the cocoa powder can vary with relatively convenient changes in processing on a single production line. Other combinations will be evident to those skilled in art based on the present disclosure.

In general, the quality of cocoa butter obtainable by extraction from cocoa mass can at least match the quality of cocoa butter isolated from the same cocoa mass using pressing techniques, and the yield may be higher with extraction. As known by those skilled in the art, quality can be measured by d/q values and β% values, by trained expert tasters, as well as by characteristics in the finished product such as, for example, cooling characteristics. The d/q value is the dQ/dt, which is the integral of Q (temperature) to t (time) from beginning to end of crystallization.

The cocoa powder can retain residual water which can be about 2 wt.% or less.

Modeling was carried out based on pilot plant considerations and Figures 7-9. Two options were considered: a low fat option and a 10/12 option. The low fat option comprises making a product with no more than about 1 wt.% cocoa butter in the cocoa powder. The 10/12 option comprises making a product with about 10-12 wt.% cocoa butter in the cocoa powder. An advantage is that both options can be produced from a single production line, on a single day, which generates substantial process flexibility and efficiency.

For pilot plant consideration, modeling and experience suggested that the low fat option be carried out with the following flow rates (kg/hr):

| | |
|---|---|
| Liquor feed | 25 |
| Feed of recycled solvent to mixer | 15 |
| Feed of recycled solvent to first wash | 15 |
| Feed of solvent to second wash | 15 |

In contrast, the 10/12 option can be carried out with the following flow rates (kg/hr):

| | |
|---|---|
| Liquor feed | 41 |
| Feed of recycled solvent to mixer | 15 |
| Feed of solvent on wash | 10 or 5 |

The following Table 2 summarizes calculated parameters for a scale-up production, not a pilot plant production, based on the configuration in Figure 7.

**Table 2**

| Parameter | Low Fat Option | 10/12 Option |
|---|---|---|
| Flow rate for cocoa liquor | 1,500 | 3,000 |
| stream (kg/hr) | | |
| Flow rate for solvent stream to | 900 | 1098 |
| mixer, recycled (kg/hr) | | |
| Flow rate for fresh butane in | 0 | 732 |
| first wash (kg/hr) | | |
| Flow rate for fresh butane in | 900 | 0 |
| second wash (kg/hr) | | |
| Flow rate for fresh butane to | 0 | 366 |
| clothwash tank (kg/hr) | | |
| Residual cocoa butter content | 0.58 | 11.0 |
| in cocoa powder (wt.%) | | |

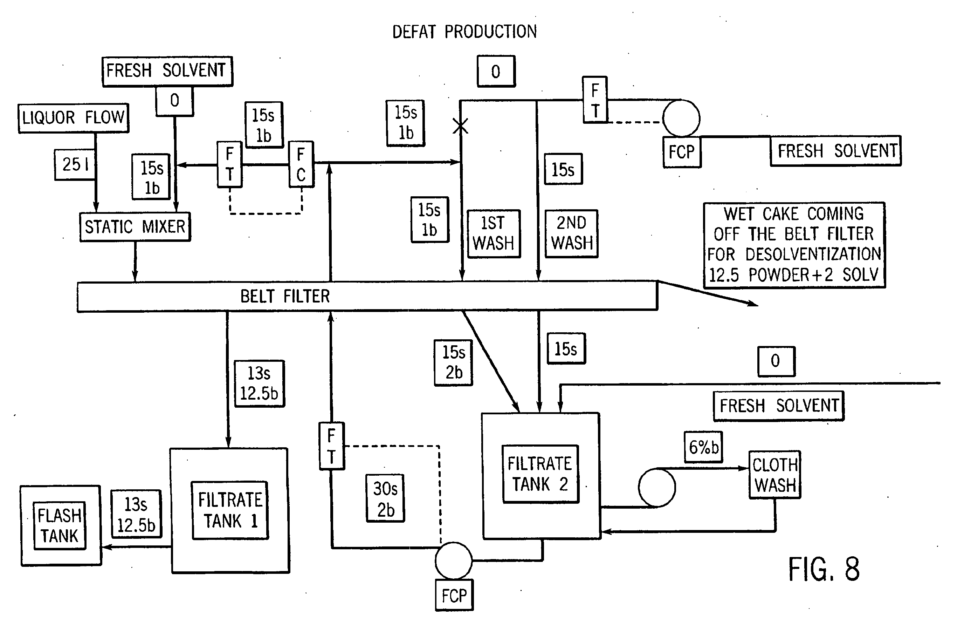

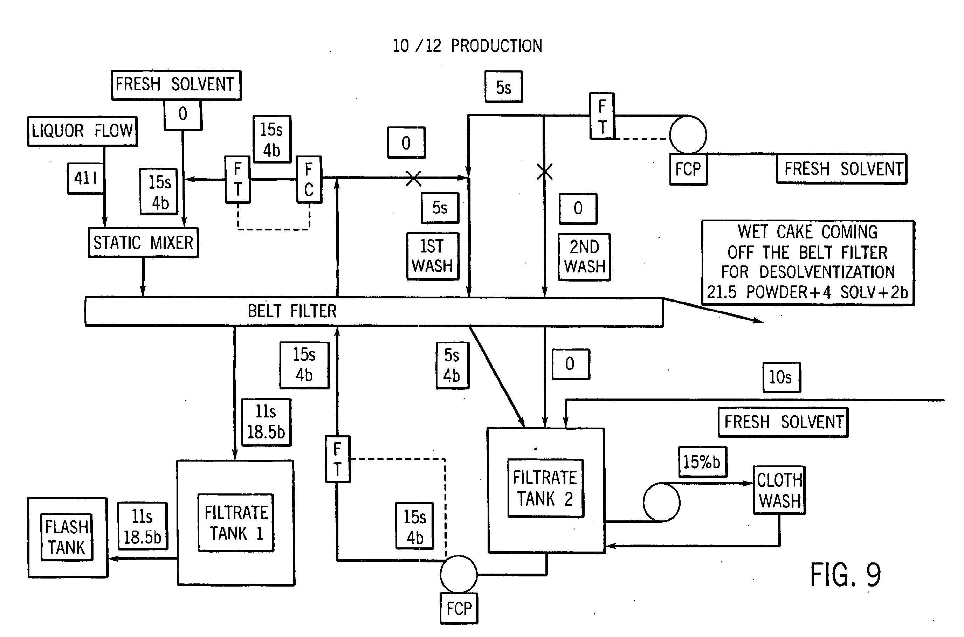

Figures 8 and 9 provide a configuration which can be adjusted for either a low fat production or 10/12 production, whichever is desired. In Figures 8 and 9, all flow rate values are in kg/hr and the following abbreviations apply:
L = liquor flow rate
S = solvent flow rate
B = butter flow rate
FT = flow transmitter
FCP = flow control pump
FC = flow control valve
Dotted line = feed back loop wherein information from the FT is fed back to the FCP
P = pump
Cloth wash = system for washing the underside of the belt
X = block of flow

A low fat production of cocoa powder (< about 1 wt.% remaining cocoa butter) is schematically illustrated in Figure 8 with use of two filtrate tanks. The ratio of liquor feed/solvent feed/wash feed 1/wash feed 2 can be, for example, 25/15/15/15. The total, overall S/L ratio can be, for example, 0.6. Individual flow rates are indicated in Figure 8, including flow shutoff (flow rate of 0).

A production of 10/12 cocoa powder (about 10 wt.% to about 12 wt.% remaining cocoa butter) is schematically illustrated in Figure 9 with use of two filtrate tanks. The ratio of liquor feed/solvent feed/wash feed can be, for example, 41/15/5. The overall S/L ratio can be, for example, 0.37. Again, individual flow rates are indicated in the Figure, including flow shutoff (flow rate of 0).

In Figures 8-9, a semi-countercurrent flow is illustrated which combines the advantages of low S/L ratio with the low investment costs of only two filtrate tanks.

An important advantage is that the production lines illustrated in Figures 8 and 9 are substantially the same, despite the differences in the cocoa powder's cocoa butter content. In each case, for example, the same general extraction, separation, and wash hardware are used. The differences in cocoa butter content can be, for example, at least about 8 wt.%, and if desired, at least about 10 wt.%. Hence, the process is versatile and provides economic efficiencies.

### WORKING EXAMPLES

A pilot plant was set up for processing cocoa liquor into cocoa powder and cocoa butter with use of liquefied gaseous butane as extraction solvent. A Kenics static mixer type ½ KMS 18 was used to carry out mixing of solvent and cocoa liquor streams before separation. A Pannevis belt filter serial number 1554, equipped with two optional washing stages, was used to carry out the separation. Wash stream 1 was located closest to where the solvent-liquor slurry is fed to the belt, and wash stream 2 was located closest to where the wet cake leaves the belt.

In a series of 13 runs, which are summarized in Table 3, cocoa powder was produced having minimal amounts of residual cocoa butter (e.g., less than 1 wt.%). In these 13 runs, the two wash stream feed rates were the same for any given run. Butane-based liquefied solvent was used for both wash streams. The experiments established that cocoa butter content in the cocoa powder could be reduced to less than 1 wt.%.

**TABLE 3**

| PARAMETER | RANGES OF |
|---|---|
| | VALUES |
| Number of runs | 13 |
| Mixing temperature (°C) | 28 - 30 |
| Mixing pressure (barg) | 3.1 - 3.5 |
| Liquor stream feed rate (kg/hr) | 20 |
| Solvent stream feed rate (kg/hr) | 20 |
| Wash stream 1 feed rate, virgin solvent (kg/hr) | 9-14.6 |
| Wash stream 2 feed rate, virgin solvent (kg/hr) | 9 - 14.6 |
| Differential pressure over belt filter (bar) | 1 |
| Beltspeed (cm/sec) | 1.0 |
| Moisture content of cocoa powder (wt. %) | 1.7 - 2.1 |
| Residual solvent in cocoa powder (ppm) | 28 - 73 |
| Residual cocoa butter in cocoa powder (wt.%) | 0.3 - 2.5 |
| measured by soxhlet extraction | |

Another series of 18 runs was carried out establishing the production of cocoa powder having less than 1 wt.% cocoa butter (Table 4). Again, for a given run, the flow rates of wash stream 1 and wash stream 2 were the same.

**TABLE 4**

| PARAMETER | RANGES OF |
|---|---|
| | VALUES |
| Number of Runs | 18 |
| Mixing temperature (°C) | 23 - 30 |
| pressure (barg) | 2.1 - 3.1 |
| Liquor stream feed rate (kg/hr) | 20-25.4 |
| Solvent stream feed rate (kg/hr) | 18.7-21.5 |
| Wash stream 1 feed rate, virgin solvent (kg/hr) | 9.5 - 14.3 |
| Wash stream 2 feed rate, virgin solvent (kg/hr) | 9.5 - 14.3 |
| Differential pressure over belt filter (bar) | 1 |
| Beltspeed (% compared to maximum) | 110 (1.0 cm/sec) |
| Moisture content of cocoa powder (wt. %) | 1.7 - 2.1 |
| Residual solvent in cocoa powder (ppm) | 30 - 69 |
| Residual cocoa butter in cocoa powder (wt.%) | 0.3 - 1.4 |
| measured by soxhlet extraction | |

Another series of 16 runs was carried out establishing the production of cocoa powder having less than 1 wt.% cocoa butter (Table 5). Again, for a given run, the flow rates of wash stream 1 and wash stream 2 were the same.

**TABLE 5**

| PARAMETER | RANGES OF |
|---|---|
| | VALUES |
| Number of Runs | 16 |
| Mixing temperature (°C) | 28 - 31 |
| pressure (barg) | 2.6 - 2.7 |
| Liquor stream feed rate (kg/hr) | 24.3 - 25.3 |
| Solvent stream feed rate (kg/hr) | 19.7 - 20.2 |
| Wash stream 1 feed rate, virgin solvent (kg/hr) | 10.7-12.8 |
| Wash stream 2 feed rate, virgin solvent (kg/hr) | 10.7 -12.8 |
| Differential pressure over belt filter (bar) | 1 |
| Beltspeed (% compared to maximum) | 110 (1.0 cm/sec |
| Moisture content of cocoa powder (wt. %) | 1.7 - 2.0 |
| Residual solvent in cocoa powder (ppm) | 26 - 73 |
| Residual cocoa butter in cocoa powder (wt.%) | 0.05 - 0.77 |
| measured by soxhlet extraction | |

Another series of 16 runs was carried out establishing the production of cocoa powder having less than 1 wt.% cocoa butter (Table 6). Again, for a given run, the flow rates of wash stream 1 and wash stream 2 were the same.

**TABLE 6**

| PARAMETER | RANGES OF |
|---|---|
| | VALUES |
| Number of Runs | 16 |
| Mixing temperature (°C) | 29 - 30 |
| pressure (barg) | 2.7 - 2.8 |
| Liquor stream feed rate (kg/hr) | 24.8-26 |
| Solvent stream feed rate (kg/hr) | 19.8-20.3 |
| Wash stream 1 feed rate, virgin solvent (kg/hr) | 11.7 -14.9 |
| Wash stream 2 feed rate, virgin solvent (kg/hr) | 11.7 - 14.9 |
| Differential pressure over belt filter (bar) | 1 |
| Beltspeed (% compared to maximum) | 110 (1.0 cm/sec) |
| Moisture content of cocoa powder (wt. %) | 1.8 - 1.9 |
| Residual solvent in cocoa powder (ppm) | 29 - 63 |
| Residual cocoa butter in cocoa powder (wt.%) | 0.1 - 0.7 |
| measured by soxhlet extraction | |

Another series of 10 runs was carried out establishing the production of cocoa powder having less than 1 wt.% cocoa butter (Table 7). Again, for a given run, the flow rates of wash stream 1 and wash stream 2 were the same.

**TABLE 7**

| PARAMETER | RANGES OF |
|---|---|
| | VALUES |
| Number of Runs | 10 |
| Mixing temperature (°C) | 29 - 30.7 |
| pressure (barg) | 2.7 - 2.8 |
| Liquor stream feed rate (kg/hr) | 24.8-27.5 |
| Solvent stream feed rate (kg/hr) | 20-22.3 |
| Wash stream 1 feed rate, virgin solvent (kg/hr) | 12.9 - 14.4 |
| Wash stream 2 feed rate, virgin solvent (kg/hr) | 12.9 -14.4 |
| Differential pressure over belt filter (bar) | 1 |
| Beltspeed (% compared to maximum) | 110 (1.0 cm/sec) |
| Moisture content of cocoa powder (wt. %) | 1.7 - 1.8 |
| Residual solvent in cocoa powder (ppm) | 34 - 66 |
| Residual cocoa butter in cocoa powder (wt.%) | 0.3 - 0.7 |
| measured by soxhlet extraction | |

After production of low fat cocoa powder, as summarized above in Tables 3-7, the pilot plant production process was adapted for production of cocoa powder having higher amounts of cocoa butter, including 10/12 cocoa powder. The results for a series of 24 runs are summarized in Table 8. In these runs, the first wash stream was eliminated. Pure solvent was used for the second wash stream, but the flow rate was sufficiently low that it was difficult to detect with flowmeter, which detects down to about 5 kg/hr. The estimated wash rate for the second stream was 4 kg/hr.

**TABLE 8**

| PARAMETER | RANGES OF |
|---|---|
| | VALUES |
| Number of Runs | 24 |
| Mixing temperature (°C) | 29 - 34 |
| Pressure (barg) | 2.7 - 3 |
| Liquor stream feed rate (kg/hr) | 37.4-41 |
| Solvent stream feed rate (kg/hr) | 12.7-14 |
| Wash stream 1 feed rate, virgin solvent (kg/hr) | 0 |
| Wash stream 2 feed rate, virgin solvent (kg/hr) | 0-3.8 |
| Differential pressure over belt filter (bar) | 1 |
| Beltspeed (% compared to maximum) | 110 (1.0 cm/sec) |
| Moisture content of cocoa powder (wt. %) | 1.7 - 1.8 |
| Residual solvent in cocoa powder (ppm) | 25 - 58 (one outlying value of 149 found) |
| Residual cocoa butter in cocoa powder (wt.%) | 5.8 - 14.6 |
| measured by soxhlet extraction | |

A series of 27 runs was carried out for production of cocoa powder having about 10.1 to about 13.6 wt.% cocoa butter, and the results are summarized in Table 9.

**TABLE 9**

| PARAMETER | RANGES OF |
|---|---|
| | VALUES |
| Number of Runs | 27 |
| Mixing temperature (°C) | 30 - 34 |
| Pressure (barg) | 2.7 - 2.9 |
| Liquor stream feed rate (kg/hr) | 40-42.9 |
| Solvent stream feed rate (kg/hr) | 12.5-14.9 |
| Wash stream 1 feed rate, virgin solvent (kg/hr) | 0 |
| Wash stream 2 feed rate, virgin solvent (kg/hr) | 0-5 |
| Differential pressure over belt filter (bar) | 1 |
| Beltspeed (% compared to maximum) | 110 (1.0 cm/sec) |
| Moisture content of cocoa powder (wt. %) | -------- |
| Residual solvent in cocoa powder (ppm) | 26 - 112 |
| Residual cocoa butter in cocoa powder (wt.%) | 10.1 -13.6 |
| measured by soxhlet extraction and NIR | |

Tables 10-14 summarize experiments (i.e., series of pilot plant runs) where the amount of residual cocoa butter was relatively low (e.g., 0.2-0.3 wt.%).

**TABLE 10**

| PARAMETER | RANGES OF |
|---|---|
| | VALUES |
| Number of Runs | 6 |
| Mixing temperature (°C) | 40 - 45 |
| pressure (barg) | 4.1 - 4.5 |
| Liquor stream feed rate (kg/hr) | 8 |
| Solvent stream feed rate (kg/hr) | 8-20 |
| Wash stream 1 feed rate, virgin solvent (kg/hr) | 12 |
| Wash stream 2 feed rate, virgin solvent (kg/hr) | 12 |
| Differential pressure over belt filter (bar) | 0.5-0.7 |
| Beltspeed (% compared to maximum) | 40 |
| Moisture content of cocoa powder (wt. %) | ---- |
| Residual solvent in cocoa powder (ppm) | 35 - 50 |
| Residual cocoa butter in cocoa powder (wt.%) | 0.2 - 0.3 |
| measured by soxhlet extraction | |

**TABLE 11**

| PARAMETER | RANGES OF |
|---|---|
| | VALUES |
| Number of Runs | 20 |
| Mixing temperature (°C) | 35 - 43 |
| pressure (barg) | 3.3-4.3 |
| Liquor stream feed rate (kg/hr) | 16 |
| Solvent stream feed rate (kg/hr) | 20 |
| Wash stream 1 feed rate, virgin solvent (kg/hr) | 0-12 |
| Wash stream 2 feed rate, virgin solvent (kg/hr) | 10-12 |
| Differential pressure over belt filter (bar) | 0.7-1 |
| Beltspeed (% compared to maximum) | 60-80 |
| Moisture content of cocoa powder (wt. %) | ---- |
| Residual solvent in cocoa powder (ppm) | 15-75 |
| Residual cocoa butter in cocoa powder (wt.%) | 0.2 - 0.5 |
| measured by soxhlet extraction | |

**TABLE 12**

| PARAMETER | RANGES OF |
|---|---|
| | VALUES |
| Number of Runs | 16 |
| Mixing temperature (°C) | 30-40 |
| pressure (barg) | 3-4 |
| Liquor stream feed rate (kg/hr) | 16 |
| Solvent stream feed rate (kg/hr) | 20 |
| Wash stream 1 feed rate, virgin solvent (kg/hr) | 0 |
| Wash stream 2 feed rate, virgin solvent (kg/hr) | 9.5-15 |
| Differential pressure over belt filter (bar) | 0.7-1 |
| Beltspeed (% compared to maximum) | 70-80 |
| Moisture content of cocoa powder (wt. %) | 2.2 - 5.2 |
| Residual solvent in cocoa powder (ppm) | 19-64 |
| Residual cocoa butter in cocoa powder (wt.%) | 0.3-1.6 |
| measured by soxhlet extraction | |

**TABLE 13**

| PARAMETER | RANGES OF |
|---|---|
| | VALUES |
| Number of Runs | 14 |
| Mixing temperature (°C) | 29 - 34 |
| pressure (barg) | 3.1 - 4 |
| Liquor stream feed rate (kg/hr) | 15-16.5 |
| Solvent stream feed rate (kg/hr) | 18.5-26 |
| Wash stream 1 feed rate, virgin solvent (kg/hr) | 0 |
| Wash stream 2 feed rate, virgin solvent (kg/hr) | 9.5-17.5 |
| Differential pressure over belt filter (bar) | 0.7 |
| Beltspeed (% compared to maximum) | 70 |
| Moisture content of cocoa powder (wt. %) | 2.3 - 9.4 |
| Residual solvent in cocoa powder (ppm) | 5 - 69 |
| Residual cocoa butter in cocoa powder (wt.%) | 0.5 - 2.2 |
| measured by soxhlet extraction | |

**TABLE 14**

| PARAMETER | RANGES OF |
|---|---|
| | VALUES |
| Number of Runs | 8 |
| Mixing temperature (°C) | 32 - 33 |
| pressure (barg) | 2.5 - 2.9 |
| Liquor stream feed rate (kg/hr) | 20 |
| Solvent stream feed rate (kg/hr) | 20 |
| Wash stream 1 feed rate, virgin solvent (kg/hr) | 7.5 - 11.8 |
| Wash stream 2 feed rate, virgin solvent (kg/hr) | 8 - 11.8 |
| Differential pressure over belt filter (bar) | 1 |
| Beltspeed (% compared to maximum) | 110 (1.0 cm/sec) |
| Moisture content of cocoa powder (wt. %) | 1.8 - 2.0 |
| Residual solvent in cocoa powder (ppm) | 31 - 55 |
| Residual cocoa butter in cocoa powder (wt.%) | 0.7 - 1.2 |
| measured by soxhlet extraction | |

A series of runs are summarized in Table 15. The optimum production of 10-12 powder was with liquor feed at 33 kg/hr and solvent feed at 38 kg/hr (S/L ratio 1.15). In contrast, use of S/L ratio of 0.75 under these conditions resulted in remaining cocoa butter content of greater than 12%.

**TABLE 15**

| PARAMETER | RANGES OF |
|---|---|
| | VALUES |
| Number of Runs | 19 |
| Mixing temperature (°C) | 31 - 35 |
| pressure (barg) | 2.7 - 3.4 |
| Liquor stream feed rate (kg/hr) | 33-40.6 |
| Solvent stream feed rate (kg/hr) | 20-38 |
| Wash stream 1 feed rate, virgin solvent (kg/hr) | 0 |
| Wash stream 2 feed rate, virgin solvent (kg/hr) | 0 |
| Differential pressure over belt filter (bar) | 1 |
| Beltspeed (% compared to maximum) | 110 (1.0 cm/sec) |
| Moisture content of cocoa powder (wt. %) | 1.5 - 2.2 |
| Residual solvent in cocoa powder (ppm) | 20 - 89 |
| Residual cocoa butter in cocoa powder (wt.%) | 10.8 -16.1 |
| measured by soxhlet extraction | |

Experiments were also carried out to maximize capacity for production of cocoa powders having less than 1 wt.% remaining cocoa butter. Capacity was measured in kg cocoa liquor processed per hour. Belt speed and pressure differential were varied. The following parameters were used:
Liquor feed: 20 kg/hr
Solvent feed: 20 kg/hr
No virgin 1 feed
Virgin 2 feed: 12-16.5 kg/hr
Delta pressure: 0.6-1
Beltspeed: 70-100 %
Pressure: 2.7 - 3.2 barg
Temperature: 34-39°C
Remaining cocoa butter content: 0.7 - 3.53 wt.%

The highest capacities were measured at a belt speed of 100% and a delta pressure of 1 bar. Flux was measured as the amount of liquid passing through the belt per unit area per unit time (L/cm²/hr).

Although illustrated and described herein with reference to certain specific embodiments and examples, the present process is nevertheless not intended to be limited to the details shown.

## Claims

1. A process for continuous cocoa powder production comprising the steps of: producing a first cocoa powder from a continuous production line having a first cocoa butter content, wherein the production line comprises at least one passive mixer for extracting cocoa mass with liquefied hydrocarbon solvent, and at least one zone for removing solvent from the mass after extraction;
producing a second cocoa powder from the same production line having a second cocoa butter content,
wherein the difference between the first and second cocoa butter contents is at least about 8 wt. %.

2. The process according to Claim 1, wherein the passive mixer is a static mixer, and the solvent removal is carried out with a belt filter.

3. The process according to any of Claims 1 and 2, wherein the first cocoa butter content is less than about 2 wt. %.

4. The process according to any of Claims 1-3, wherein the second cocoa butter content is about 9 wt. % to about 13 wt. %.

5. The process according to Claim 1, wherein the first cocoa butter content is less than about 2 wt. %, and the second cocoa butter content is about 9 wt. % to about 13 wt. %.

6. The process according to Claim 1, wherein the difference is at least about 10 wt. %.

7. The process according to Claim 1, comprising mixing the cocoa mass with the liquid hydrocarbon solvent which included at least 90 wt. % butane using a static mixer and wherein the production line is **characterized by** a mixing time before separation of solvent from cocoa solids in the at least one zone for solvent removal of about 2 seconds to about 240 seconds.

8. The process according to Claims 1-6, wherein the production line is **characterized by** a mixing time before separation of about 60 seconds to about 110 seconds.

9. The process according to Claims 1-8, wherein the extraction is carried out in the at least one passive mixer at about 10°C to about 34°C.

10. The process according to Claims 1-7 and 9, wherein the solvent comprises at least 90 wt. % saturated hydrocarbon having molecular weight of no more than 75.

11. The process according to Claims 1-10, wherein the total mass ratio between the mass of solvent and the mass of cocoa mass during extraction and separation is about 0.1 : 1 to about 2: 1.

12. The process according to Claims 1-11, wherein the passive mixer is a static mixer, wherein the at least one zone for removing solvent includes a belt filter, the separation is carried out with the belt filter, and wherein the first cocoa butter content is less than about 2 wt. %, and the second cocoa butter content is about 9 wt. % to about 13 wt. %.

13. The process according to Claim 12, wherein the extraction is carried out in the static mixer at about 10 C to about 34°C.

14. The process according to Claim 12, wherein the production line is **characterized by** a mixing time before separation of less than about 110 seconds.

15. A process for continuous cocoa powder production according to Claim 1,
wherein the conditions are adjusted so that the difference between the first and second cocoa butter contents is at least about 8 wt. %,
and
wherein the adjusted conditions comprise the total mass ratio between the mass of solvent and the mass of cocoa mass.

16. The process according to Claim 15, wherein the at least one passive mixer comprises a static mixer.

17. The process according to Claim 15, wherein the passive mixing is **characterized by** a mixing time before separation of less than about 110 seconds.

18. A process according to Claim 1 comprising the step of:
producing first and second cocoa powders from the same continuous production line using liquefied gas extraction at temperature of less than about 34°C, the first cocoa powder having a first cocoa butter content of about 9 wt. % to about 13 wt. % and the second cocoa powder having a second cocoa butter content of less than about 2 wt. %, wherein the production line comprises at least one passive mixer and at least one filter device for solvent removal.

19. The process according to Claim 18, wherein at least one static mixer is used to provide a mixing time before separation of the liquefied gas from the first cocoa powder of no more than 110 seconds.

20. A process for cocoa powder production according to Claim 1 comprising:
producing first and second cocoa powders, which have cocoa butter contents differing by at least about 8 wt. %, using a single continuous production line which includes a belt filter, at least one passive mixing device and no dynamic mixing device;
wherein the first cocoa powder has a cocoa butter content of no more than about 2 wt.%; and
producing the first cocoa powder comprises mixing a first cocoa mass containing at least about 20 wt. % cocoa butter with a first liquefied solvent in the at least one passive mixing device to provide a first slurry;
separating the first slurry into a first cocoa solids stream and a first solvent stream with the belt filter; and
washing the first cocoa solids stream with a second liquefied solvent;
wherein the first cocoa mass and the first liquefied solvent are in contact for no more than about 240 seconds prior to the separating operation; and the first and second liquefied solvents include at least about 90 wt. % saturated hydrocarbon having a molecular weight of no more than 75.

## Patentansprüche

1. Verfahren zur kontinuierlichen Herstellung von Kakaopulver, umfassend die Schritte: Herstellen eines ersten Kakaopulvers, welches einen ersten Kakaobuttergehalt aufweist, in einer kontinuierlichen Fertigungslinie, wobei die Fertigungslinie mindestens einen Passivmischer zum Extrahieren von Kakaomasse mit verflüssigtem Kohlenwasserstoff-Lösungsmittel aufweist und mindestens eine Zone zum Entfernen von Lösungsmittel aus der Masse nach der Extraktion;
Herstellen eines zweiten Kakaopulvers, welches einen zweiten Kakaobuttergehalt aufweist, auf derselben Fertigungslinie,
wobei die Differenz zwischen dem ersten und zweiten Kakaobuttergehalt mindestens 8 Gew.-% beträgt.

2. Verfahren gemäß Anspruch 1, wobei der Passivmischer ein statischer Mischer ist und das Entfernen des Lösungsmittels mit einem Bandfilter durchgeführt wird.

3. Verfahren gemäß einem der Ansprüche 1 und 2, wobei der erste Kakaobuttergehalt weniger als ungefähr 2 Gew.-% beträgt.

4. Verfahren gemäß einem der Ansprüche 1 bis 3, wobei der zweite Kakaobuttergehalt ungefähr 9 Gew.-% bis ungefähr 13 Gew.-% beträgt.

5. Verfahren gemäß Anspruch 1, wobei der erste Kakaobuttergehalt weniger als ungefähr 2 Gew.-% beträgt und der zweite Kakaobuttergehalt ungefähr 9 Gew.-% bis ungefähr 13 Gew.-% beträgt.

6. Verfahren gemäß Anspruch 1, wobei die Differenz mindestens ungefähr 10 Gew.-% beträgt.

7. Verfahren gemäß Anspruch 1, umfassend das Mischen der Kakaomasse mit dem flüssigen Kohlenwasserstoff-Lösungsmittel, welches mindestens 90 Gew.-% Butan enthielt, unter Verwendung eines statischen Mischers und wobei die Fertigungslinie durch eine Mischzeit vor Abtrennung des Lösungsmittels von den Kakaofeststoffen in der mindestens einen Zone zum Entfernen von Lösungsmittel von ungefähr 2 Sekunden bis ungefähr 240 Sekunden **gekennzeichnet** ist.

8. Verfahren gemäß den Ansprüchen 1 bis 6, wobei die Fertigungslinie durch eine Mischzeit vor Abtrennen von ungefähr 60 Sekunden bis ungefähr 110 Sekunden **gekennzeichnet** ist.

9. Verfahren gemäß den Ansprüchen 1 bis 8, wobei die Extraktion in mindestens einem Passivmischer bei ungefähr 10 °C bis ungefähr 34 °C durchgeführt wird.

10. Verfahren gemäß den Ansprüchen 1 bis 7 und 9, wobei das Lösungsmittel mindestens 90 Gew.-% gesättigten Kohlenwasserstoff, der ein Molekulargewicht von nicht mehr als 75 aufweist, enthält.

11. Verfahren gemäß den Ansprüchen 1 bis 10, wobei das Gesamtmengenverhältnis zwischen der Menge an Lösungsmittel und der Menge an Kakaomasse während Extraktion und Abtrennung ungefähr 0,1 : 1 bis ungefähr 2 : 1 beträgt.

12. Verfahren gemäß den Ansprüchen 1 bis 11, wobei der Passivmischer ein statischer Mischer ist, wobei die mindestens eine Zone zum Entfernen von Lösungsmittel ein Bandfilter enthält, das Abtrennen mit dem Bandfilter ausgeführt wird, und wobei der erste Kakaobuttergehalt weniger als ungefähr 2 Gew.-% und der zweite Kakaobuttergehalt ungefähr 9 Gew.-% bis ungefähr 13 Gew.-% beträgt.

13. Verfahren gemäß Anspruch 12, wobei die Extraktion in dem statischen Mischer bei ungefähr 10 °C bis ungefähr 34 °C durchgeführt wird.

14. Verfahren gemäß Anspruch 12, wobei die Fertigungslinie durch eine Mischzeit vor Abtrennung von kleiner als ungefähr 110 Sekunden **gekennzeichnet** ist.

15. Verfahren zur kontinuierlichen Herstellung von Kakaopulver gemäß Anspruch 1,
wobei die Bedingungen so abgestimmt sind, dass die Differenz zwischen dem ersten und zweiten Kakaobuttergehalt mindestens ungefähr 8 Gew.-% beträgt,
und
wobei die abgestimmten Bedingungen das Gesamtmengenverhältnis zwischen der Menge an Lösungsmittel und der Menge an Kakaomasse umfassen.

16. Verfahren gemäß Anspruch 15, wobei der mindestens eine Passivmischer einen statischen Mischer umfasst.

17. Verfahren gemäß Anspruch 15, wobei das passive Mischen durch eine Mischzeit vor Abtrennung von kleiner als ungefähr 110 Sekunden **gekennzeichnet** ist.

18. Verfahren gemäß Anspruch 1, umfassend die Schritte: Herstellen von ersten und zweiten Kakaopulvern in derselben kontinuierlichen Fertigungslinie unter Verwendung von Flüssiggasextraktion bei einer Temperatur von kleiner als ungefähr 34 °C, wobei das erste Kakaopulver einen ersten Kakaobuttergehalt von ungefähr 9 Gew.-% bis ungefähr 13 Gew.-% aufweist und das zweite Kakaopulver einen zweiten Kakaobuttergehalt von weniger als ungefähr 2 Gew.-% aufweist, wobei die Fertigungslinie mindestens einen Passivmischer und mindestens eine Filtriervorrichtung zum Entfernen von Lösungsmittel umfasst.

19. Verfahren gemäß Anspruch 18, wobei der mindestens eine statische Mischer genutzt wird, um eine Mischzeit vor Abtrennung des Flüssiggases von dem ersten Kakaopulver von nicht mehr als 110 Sekunden zu erhalten.

20. Verfahren zur Herstellung von Kakaopulver gemäß Anspruch 1, umfassend: das Herstellen von ersten und zweiten Kakaopulvern, welche einen Kakaobuttergehalt mit einer Differenz von mindestens ungefähr 8 Gew.-% aufweisen, unter Verwendung einer einzigen kontinuierlichen Fertigungslinie, die ein Bandfilter, mindestens eine Passivmischvorrichtung und keine dynamische Mischvorrichtung enthält;
wobei das erste Kakaopulver einen Kakaobuttergehalt von nicht mehr als ungefähr 2 Gew.-% aufweist;
und
das Herstellen des ersten Kakaopulvers das Mischen einer ersten Kakaomasse, enthaltend mindestens ungefähr 20 Gew.-% Kakaobutter, mit einem ersten verflüssigten Lösungsmittel in der mindestens einen Passivmischvorrichtung, um eine erste Aufschlämmung zu erhalten, umfasst;
das Auftrennen der ersten Aufschlämmung in einen ersten Kakaofeststoff-Strom und einen ersten Lösungsmittelstrom durch das Bandfilter; und
das Waschen des ersten Kakaofeststoff-Stroms mit einem zweiten verflüssigten Lösungsmittel;
wobei die erste Kakaomasse und das erste verflüssigte Lösungsmittel für nicht mehr als ungefähr 240 Sekunden vor dem Abtrennvorgang in Kontakt sind; und das erste und zweite verflüssigte Lösungsmittel mindestens ungefähr 90 Gew.-% gesättigten Kohlenwasserstoff, der ein Molekulargewicht von nicht mehr als 75 aufweist, enthalten.

## Revendications

1. Un procédé pour la production continue de poudre de cacao comprenant les étapes consistant à :
produire une première poudre de cacao, présentant une première teneur en beurre de cacao à partir d'une ligne de production continue, dans lequel la ligne de production comprend au moins un mélangeur passif pour extraire de la masse de cacao avec un solvant hydrocarburé liquéfié, et au moins une zone pour éliminer le solvant de la masse après extraction ;
produire une seconde poudre de cacao présentant une seconde teneur en beurre de cacao à partir de la même ligne de production,
dans lequel la différence entre la première et la seconde teneur en beurre de cacao est d'au moins environ 8% en poids.

2. Le procédé selon la revendication 1, dans lequel le mélangeur passif est un mélangeur statique, et l'élimination du solvant est effectuée à l'aide d'un filtre à bande.

3. Le procédé selon l'une des revendications 1 ou 2, dans lequel la première teneur en beurre de cacao est de moins d'environ 2% en poids.

4. Le procédé selon l'une quelconques des revendications 1 à 3, dans lequel la seconde teneur en beurre de cacao est d'environ 9% à environ 13% en poids.

5. Le procédé selon la revendication 1, dans lequel la première teneur en beurre de cacao est de moins d'environ 2% en poids, et la seconde teneur en beurre de cacao est d'environ 9% à environ 13% en poids.

6. Le procédé selon la revendication 1, dans lequel la différence est d'au moins environ 10% en poids.

7. Le procédé selon la revendication 1, comprenant le mélange de la masse de cacao avec le solvant hydrocarburé liquéfié qui contient au moins 90% en poids de butane, en utilisant un mélangeur statique, et dans lequel la ligne de production est **caractérisée par** un temps de mélange, préalablement à la séparation du solvant et du cacao solide, dans la au moins une zone pour éliminer le solvant d'environ 2 secondes à environ 240 secondes.

8. Le procédé selon l'une quelconques des revendications 1 à 6, dans lequel la ligne de production est **caractérisée par** un temps de mélange préalablement à la séparation d'environ 60 secondes à environ 110 secondes.

9. Le procédé selon l'une quelconques des revendications 1 à 8, dans lequel l'extraction est réalisée dans le au moins un mélangeur passif à environ 10 à 34°C.

10. Le procédé selon l'une quelconques des revendications 1 à 7 et 9, dans lequel le solvant comprend au moins 90% en poids d'hydrocarbure saturé présentant une masse moléculaire ne dépassant pas 75.

11. Le procédé selon l'une quelconques des revendications 1 à 10, dans lequel le rapport de masse totale : masse de solvant/masse de cacao pendant l'extraction et la séparation est d'environ 0,1:1 à environ 2:1.

12. Le procédé selon l'une quelconques des revendications 1 à 11, dans lequel le mélangeur passif est un mélangeur statique, dans lequel la au moins une zone pour éliminer le solvant inclut un filtre à bande, la séparation étant réalisée avec le filtre à bande, et dans lequel la première teneur en beurre de cacao est inférieure à environ 2% en poids, et la seconde teneur en beurre de cacao est d'environ 9% à environ 13% en poids.

13. Le procédé selon la revendication 12, dans lequel l'extraction est réalisée dans le mélangeur statique à environ 10 à environ 34°C.

14. Le procédé selon la revendication 12, dans lequel la ligne de production est **caractérisée par** un temps de mélange préalablement à la séparation inférieur à environ 110 secondes.

15. Un procédé de production continue de poudre de cacao selon la revendication 1,
dans lequel les conditions sont ajustées de telle manière que la différence entre la première et la seconde teneur en beurre de cacao est d'au moins environ 8% en poids,
et
dans lequel les conditions ajustées comprennent le rapport de masse total : masse de solvant/masse de cacao pendant l'extraction et la séparation.

16. Le procédé selon la revendication 15, dans lequel le au moins un mélangeur passif comprend un mélangeur statique.

17. Le procédé selon la revendication 15, dans lequel le mélange passif est **caractérisé par** un temps de mélange avant séparation inférieur à environ 110 secondes.

18. Le procédé selon la revendication 1, comprenant l'étape consistant à : produire une première et une seconde poudre de cacao à partir de la même ligne de production continue en utilisant une extraction à partir de gaz liquéfié à une température de moins d'environ 34°C, la première poudre de cacao ayant une première teneur en beurre de cacao d'environ 9 à environ 13 % en poids, et la seconde poudre de cacao ayant une seconde teneur en beurre de cacao inférieure à environ 2 % en poids, dans lequel la ligne de production comprends au moins un mélangeur passif et au moins un dispositif de filtration pour éliminer le solvant.

19. Le procédé selon la revendication 18, dans lequel au moins un mélangeur statique est utilisé pour fournir un temps de mélange préalablement à la séparation du gaz liquéfié et de la première poudre de cacao de pas plus de 110 secondes.

20. Un procédé pour la production de poudre de cacao selon la revendication 1, comprenant les étapes consistant à :
produire une première et une seconde poudre de cacao, qui ont des teneurs en beurre de cacao différentes d'au moins environ 8% en poids, en utilisant une ligne de production continue qui inclut un filtre à bande, au moins un dispositif de mélange passif et aucun dispositif de mélange passif ;
dans lequel la première poudre de cacao a une teneur en beurre de cacao ne dépassant pas environ 2 % en poids ;
et
produire la première poudre de cacao, ceci comprenant le mélange d'une première masse de cacao contenant au moins environ 20% en poids de beurre de cacao avec un premier solvant liquéfié dans le au moins un dispositif de mélange passif afin de fournir une première suspension ;
séparer la première suspension en un premier flux de cacao solide et un premier flux de solvant avec un filtre à bande ; et
laver le premier flux de cacao solide avec un second solvant liquéfié ;
dans lequel la première masse de cacao et le premier solvant liquéfié sont en contact pendant pas plus de 240 secondes préalablement à l'opération de séparation ; et les premier et second solvants liquéfiés comprennent au moins environ 90% en poids d'hydrocarbure saturé, ayant une masse moléculaire ne dépassant pas 75.
